(19) Europäisches Patentamt
European Patent Office
Office européen des brevets

(11) **EP 3 378 681 B1**

(12) **EUROPEAN PATENT SPECIFICATION**

(45) Date of publication and mention
of the grant of the patent:
**02.12.2020 Bulletin 2020/49**

(51) Int Cl.:
**B60C 23/04** (2006.01)    **B60C 23/06** (2006.01)

(21) Application number: **18159249.4**

(22) Date of filing: **28.02.2018**

(54) **A SYSTEM AND METHOD FOR DETERMINING WHEEL LOAD**

SYSTEM UND VERFAHREN ZUR BESTIMMUNG DER RADLAST

SYSTÈME ET PROCÉDÉ DE DÉTERMINATION DE CHARGE DE ROUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.03.2017 GB 201704512**

(43) Date of publication of application:
**26.09.2018 Bulletin 2018/39**

(73) Proprietor: **AGCO International GmbH
8212 Neuhausen am Rheinfall (CH)**

(72) Inventor: **BRENNINGER, Martin
87616 Marktoberdorf (DE)**

(74) Representative: **AGCO Intellectual Property
Department
AGCO Limited
Abbey Park Stoneleigh
Kenilworth, Warwickshire CV8 2TQ (GB)**

(56) References cited:
**EP-A1- 3 020 578        WO-A1-2015/014636
WO-A2-2004/016455    DE-A1-102007 047 399**

**Description**

**Field of the Invention**

The present invention relates to a system and method for determining wheel load, preferably for a rear axle wheel of an agricultural tractor.

**Background of the Invention**

In many vehicles, it can be advantageous to provide a system to determine the precise wheel load for each wheel or axle of the vehicle. For example, in vehicles equipped with tyre pressure regulation systems, the wheel load is used to enable the adjustment of tyre pressures without exceeding the tyre capability, or the generation of an optimised load distribution profile to provide guidance to the operator on ballasting of the tractor.

It is well known, for suspended axles, to determine the wheel load by measuring the pressure in the hydraulic or pneumatic cylinders of the suspension. However, in the case of an agricultural tractor, only the front axle is equipped with such a suspension system from which the wheel load may be determined, so the rear axle requires a different solution. According to one approach, it is known to use axle bearings which are equipped with load sensing means. These means require changes in the axle installation and are costly. Furthermore, optional usage is not generally an economic option due to the impact of the changes on the complete axle design and the resulting costs.

An alternative solution is shown in European Patent No. EP 2802202 B1, wherein strain sensors are attached to certain locations of a rear axle trumpet housing, in an effort to provide an accurate determination of wheel load. However, such solutions continue to require additional effort in design and manufacture to accommodate such sensors and the communication apparatus associated therewith.

International patent application WO 2004/016455 describes a wheel-state obtaining apparatus for a vehicle which determines the wheel load for a wheel of a first axle based on the tyre pressure and wheel geometry of that wheel. The wheel geometry of that wheel is determined based on the wheel geometry of a wheel of a second axle and the wheel speed ratio between the first and second axles. Wheel geometry may be specified through radius, as noted in German patent application DE 10 2007 047 399 A1.

It is an object of the invention to provide a vehicle having an improved system for determining wheel load.

**Summary of the Invention**

Accordingly, there is provided a method for determining the wheel load for a wheel of an axle, the method comprising:

determining the wheel load for a wheel of a first axle ("first axle wheel") based on the tyre pressure of the first axle wheel and the wheel geometry of the first axle wheel,
wherein the wheel geometry of the first axle wheel is determined based on the wheel geometry of a wheel of a second axle, and the wheel speed ratio between the first and second axles;
characterised in that the method further comprises the step of providing a characteristic profile for the first axle wheel, the characteristic profile defining the relationship between a wheel load and a wheel geometry for different tyre pressure values, and wherein the step of determining the wheel load for the first axle wheel comprises calculating the wheel load based on the tyre pressure and the wheel geometry of the first axle wheel using the characteristic profile for the first axle wheel.

As some vehicles may not easily provide for accurate measurement of wheel load for all vehicle axles, the present invention provides a system for determining the wheel load for a first axle based on information derived from a second axle, and the ratio of the rotational speed between the wheels of the first and second axles. This allows for the simple and accurate determination of the wheel load of the first axle, without the need for a direct measurement of the wheel load or other strain-related elements at the first axle. It will be understood that the invention is intended for use in the case of axles which independently rotate, i.e. the front and rear axles are not drivingly connected to each other.

The wheel geometry may comprise any suitable characteristic of the wheel, preferably the wheel circumference, but may additionally or alternatively comprise the radius of the wheel, the diameter, etc.

In a particularly preferred embodiment, the method is configured for determining the wheel load for a wheel of a rear axle of an agricultural tractor. Preferably, the first axle is a rear axle of an agricultural tractor. Preferably, the second axle is a front axle of an agricultural tractor.

Due to the constructional design of agricultural tractors, the front axle is generally provided with a suspension system to allow for movement of the wheels of the front axle relative to the rest of the tractor body. As such, the wheel load of a wheel of a front axle of an agricultural tractor can be relatively easily measured, through the use of appropriate load sensors, and/or by monitoring the hydraulic pressure in the suspension system. By contrast, the rear axle of an agricultural tractor is generally provided without a suspension system, and rigid with the tractor body, such that measurement of the wheel loads of the rear axle of an agricultural tractor can present significant challenges for an operator. Accordingly, the use of known data from the front axle of the tractor, as well as the monitored tyre pressure of the rear axle, can provide a simple method of the calculation of the wheel load of a rear axle of a tractor.

For a particular vehicle wheel, the wheel geometry and the wheel load are related, based on the tyre pressure of the wheel. By retaining this information in the form of a characteristic profile, accordingly the wheel load can be determined for a wheel when the tyre pressure and the wheel geometry of the wheel are known.

Preferably, the method comprises the step of determining the wheel geometry of the second axle wheel, based on the wheel load of the second axle wheel and the tyre pressure of the second axle wheel.

Preferably, the method comprises the step of receiving a wheel load for the second axle wheel, further preferably by monitoring the output of a load sensor of the second axle wheel. Additionally or alternatively, the wheel load of the second axle wheel may be determined by monitoring cylinder pressure of an axle suspension cylinder for the second axle wheel.

Preferably, the method comprises the step of receiving a tyre pressure for the second axle wheel, preferably by monitoring the tyre pressure of the second axle wheel.

Preferably, the step of monitoring comprises receiving the output of a tyre pressure sensor for the second axle wheel. The tyre pressure sensor may be provided as part of a tyre pressure control system of the wheel.

Preferably, the method comprises the step of providing a characteristic profile for the second axle wheel, the characteristic profile defining the relationship between a wheel load and a wheel geometry for different tyre pressure values, and wherein the step of determining the wheel geometry for the second axle wheel comprises calculating the wheel geometry based on the tyre pressure and the wheel load of the second axle wheel using the characteristic profile for the second axle wheel.

The characteristic profiles of the first axle wheel and/or the second axle wheel may be stored in an on-board memory of a vehicle, e.g. as a look-up table or similar. Alternatively, the method may comprise the processing of predefined algorithms to determine the characteristic profiles of the first axle wheel and/or the second axle wheel.

Preferably, the method comprises the step of determining the wheel speed ratio between the first and second axles by measuring the rotational speed of the first axle and the rotational speed of the second axle, and calculating the ratio between the measured speeds.

Preferably, step of measuring comprises receiving the output of a speed sensor for the first axle and the output of a speed sensor for the second axle.

It will be understood that measuring the speed of an axle can comprise measuring the rotational speed of at least one wheel of the axle.

Preferably, the method comprises the step of monitoring the tyre pressure of the first axle wheel.

Preferably, the step of monitoring comprises receiving the output of a tyre pressure sensor for the first axle wheel. The tyre pressure sensor may be provided as part of a tyre pressure control system for the wheel.

There is also provided a vehicle, preferably an agricultural tractor, having an electronic control unit (ECU) arranged to carry out the method as described above.

The vehicle is provided with a first axle having at least one wheel, preferably a rear axle of an agricultural tractor. The vehicle is provided with a second axle having at least one wheel, preferably a front axle of an agricultural tractor. It will be understood that the front axle and the rear axle are independently rotatable.

Preferably, the vehicle comprises an on-board memory communicatively coupled with the ECU, e.g. as a look-up table, to store the characteristic profile of the first and/or second axle wheels.

Alternatively, the ECU is provided with algorithms to determine the characteristic profiles of the first axle wheel and/or the second axle wheel.

Preferably, the vehicle comprises a load sensor provided at the second axle, to determine the wheel load of the second axle wheel.

Additionally or alternatively, the vehicle comprises a pressure sensor arranged to monitor the cylinder pressure of an axle suspension cylinder for the second axle wheel, wherein the wheel load of the second axle wheel is determined based on the monitored cylinder pressure.

Preferably, the vehicle comprises a tyre pressure sensor for the first axle wheel and/or for the second axle wheel. The tyre pressure sensor may be provided as part of a tyre pressure control system of the first or second axle wheels.

There is further provided a system for determining the wheel load for a wheel of an axle, the system comprising an ECU arranged to carry out the steps of the method as described above. It will be understood that the system may be provided as a kit of parts to be installed onto or retrofitted to a vehicle to determine the wheel load for a wheel of an axle of the vehicle. The system may comprise suitable tyre pressure sensors, speed sensors, rotational sensors, and/or memory units as appropriate, but it will be understood that the system may be arranged to interface with the pre-existing sensors and systems of the vehicle.

**Detailed Description of the Invention**

Embodiments of the invention will now be described, by way of example only, with reference to the accompanying drawings, in which:

Fig. 1 is a side view of an agricultural tractor having a system for determining wheel load according to the invention;
Fig. 2 is a schematic overview of the system according to the invention;
Fig. 3 is an illustration of a characteristic profile for a wheel of the tractor of Fig. 1, defining the relationship between a wheel load and a wheel circumference for different tyre pressure values of the wheel; and
Fig. 4 is an illustration of a characteristic profile for a further wheel of the tractor of Fig. 1.

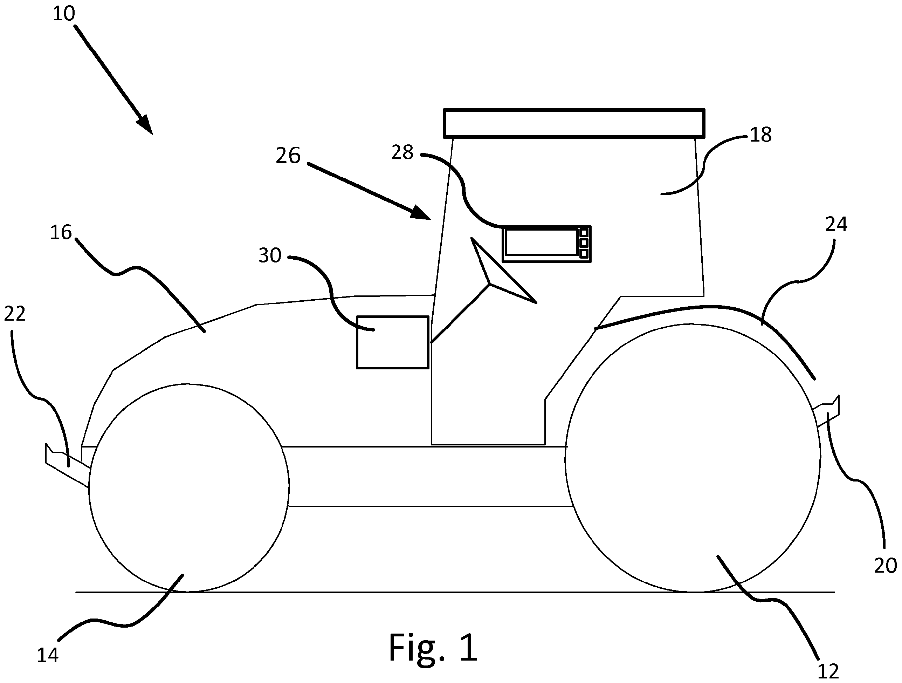

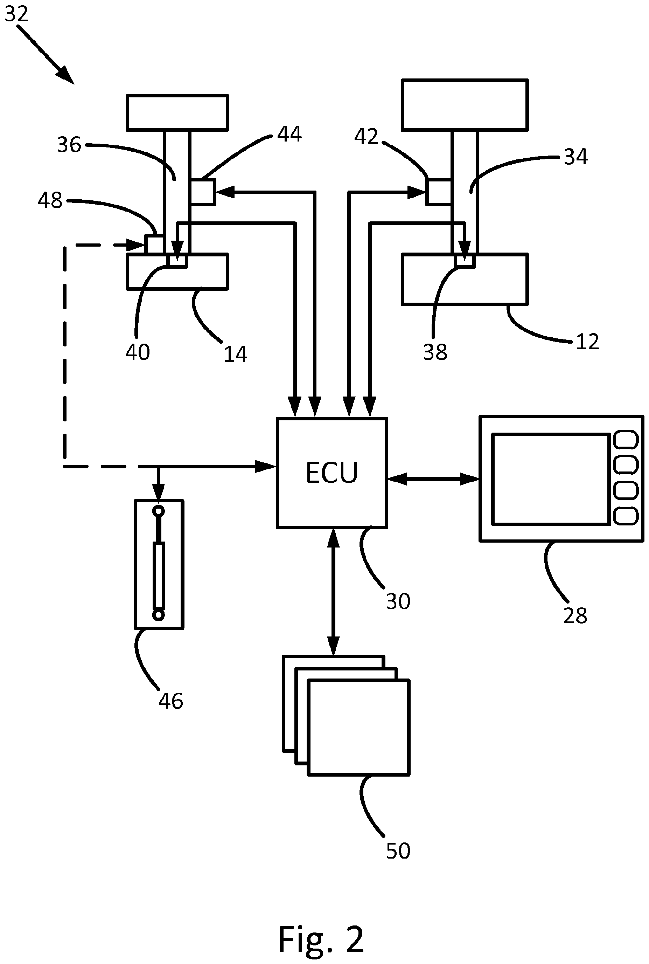

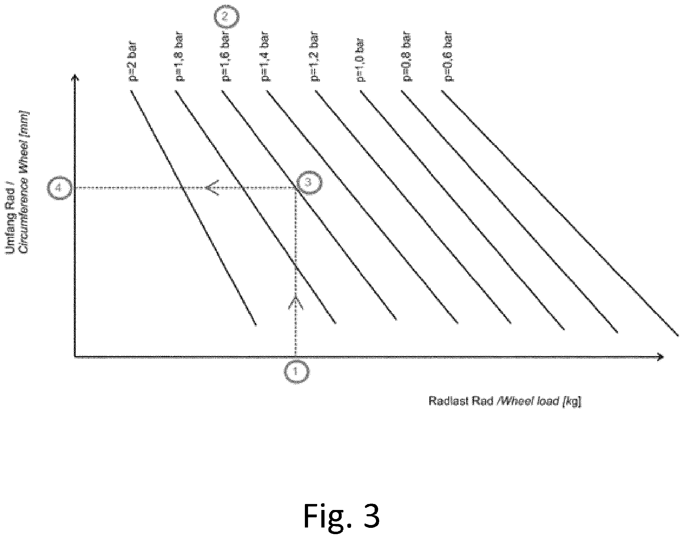

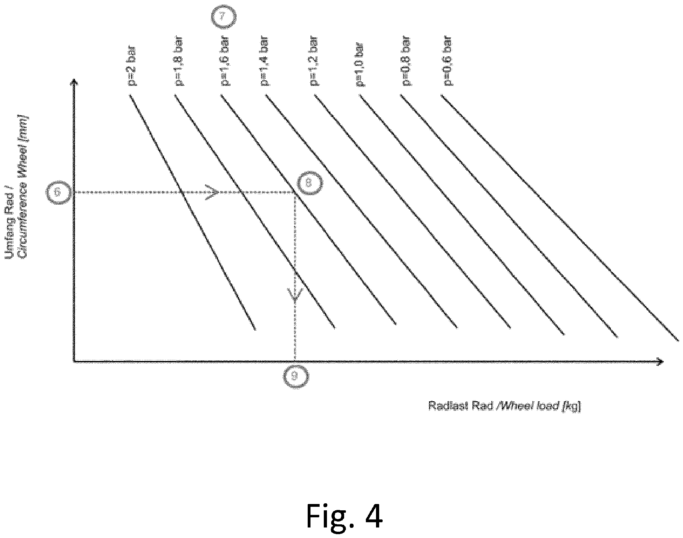

The drawings are provided by way of reference only, and will be acknowledged as not to scale.
With reference to Fig. 1, a vehicle according to the invention in the form of an agricultural tractor is indicated at 10. The tractor 10 comprises rear wheels 12 and front wheels 14, a forward engine compartment 16 and a cab section 18. A rear linkage 20 is provided at the rear of the tractor 10, and a front linkage 22 is provided at the front of the tractor 10. Rear fenders 24 are provided to cover a portion of the rear wheels 12.
Within the cab 18, an operator station 26 is provided, where the operator can access a display terminal and associated operator controls 28. The tractor 10 is provided with at least one electronic control unit (ECU) 30. The ECU is configured to interface with the operator controls 28 and with the various systems and sensors provided about the tractor 10, to provide for monitoring and control of tractor operation. The operator controls 28 and ECU 30 allow the operator to actuate different elements of the tractor 10, e.g. hydraulic circuits, lifting systems, HVAC operation, and/or to control the acceleration and steering of the tractor 10.
The tractor 10 further comprises a system for determining wheel load for a wheel of an axle of the tractor 10. With reference to Fig. 2, an overview of the system for determining wheel load is indicated generally at 32. The system of Fig. 2 is coupled with a rear axle 34 and a front axle 36 of the tractor of the tractor 10, to which axles rear wheels 12 and front wheels 14 are respectively mounted. While the system 32 is shown in use for one of the rear wheels 12 and one of the front wheels 14, it will be understood that the system and associated components may be replicated for each of the wheels of the tractor 10. The rear and front axles 34,36 are independently rotatable.
The ECU 30 is coupled with a system 38 for monitoring the tyre pressure of the rear wheel 12 of the tractor 10. The rear tyre pressure system 38 may be provided as a dedicated pressure sensor located in or on the rear wheel 12, or the rear tyre pressure system 38 may be provided as part of a tyre pressure control system, used for the regulation of tyre pressure of the rear wheel 12 during tractor operation.
Similarly, the ECU 30 is coupled with a system 40 for monitoring the tyre pressure of the front wheel 14 of the tractor 10. The front tyre pressure system 40 may be provided as a dedicated pressure sensor located in or on the front wheel 14, or the front tyre pressure system 40 may be provided as part of a tyre pressure control system, used for the regulation of tyre pressure of the front wheel 14 during tractor operation.
The ECU 30 is coupled with a rear axle speed sensor 42 and a front axle speed sensor 44, which are arranged to monitor the speed of the respective rear and front axles 34,36. Additionally or alternatively, the ECU 30 may be coupled with speed sensors which are arranged to monitor the rotational speed of the individual wheels of the tractor 10.
The ECU 30 is further coupled with a system arranged to monitor the wheel load of the front axle 36, by monitoring the pressure in a suspension system of the front axle 36. The ECU 30 may be connected to a hydraulic cylinder 46 or other axle suspension cylinder of the suspension system to directly monitor the pressure of the suspension system, which can be used to determine the loading of the axle. Additionally or alternatively, the ECU 30 can be connected to a load sensor 48 provided directly at the front axle 36 to monitor the wheel load of the front wheel 14.
The ECU 30 is further coupled with an on-board memory system 50. The memory system 50 is configured to retain data relating to a characteristic profile of the wheels 12,14 of the tractor 10. In particular, the characteristic profile of a tractor wheel defines the relationship between a wheel load and a wheel circumference for different tyre pressure values. The memory system 50 may be arranged to store a plurality of different characteristic profiles for an array of different wheel types, wherein the ECU 30 is adapted to select the correct characteristic profile based on a detection of the wheels 12,14 installed on the tractor 10, or the correct characteristic profiles can be selected by an operator input using the operator controls 28. Examples of the data which may be retained in a characteristic profile are shown in Figs. 3 and 4.
The characteristic profiles may be stored as a look-up table or similar, to enable the ECU 30 to easily access required data. Alternatively, the ECU 30 may be provided with suitable algorithms from the memory 50 to enable the ECU 30 to dynamically calculate the relationship between wheel load, wheel circumference and tyre pressure for a particular wheel.

The wheel load determining system 32 is configured to determine the wheel load for a first axle of a vehicle, using data obtained from a second axle of the vehicle when the both are not drivingly connected to each other. In particular, the system 32 is configured to determine the wheel load using the tyre pressure and the wheel circumference for a wheel of the first axle, where the wheel circumference is determined based on the wheel circumference of a wheel of a second axle, and the lead ratio between the first and second axles. As the wheel load for a front axle 36 of the tractor 10 may be relatively easily determined by monitoring the suspension system pressure, accordingly the system 32 is advantageously used to determine the wheel load for the rear axle 34 of the tractor 10, using data from the front axle 36 of the tractor 10.

The method of operation of the system 32 will now be described, with reference to Figs. 3 and 4. Fig. 3 is an illustration of a characteristic profile for the front wheel 14 of the tractor 10, defining the relationship between a wheel load and a wheel circumference for different tyre pressure values of the front wheel 14. Similarly, Fig. 4 is an illustration of a characteristic profile for the rear wheel 12 of the tractor 10, defining the relationship between a wheel load and a wheel circumference for different tyre pressure values of the rear wheel 12. As this relationship is provided by a tyre manufacturer or determined by the vehicle manufacturer in a calibration process, it is envisaged that the relationship may be described in different ways. For example, instead of the circumference of the wheel depicted on the vertical axis in Figure 3 and 4, the wheel radius or diameter may be used, as these three factors can be easily determined depending on each other.

Initially, the wheel load of the front axle 36 is determined, by monitoring the output of the suspension system for the front axle 36. The ECU 30 is arranged to determine the load based on the pressure of a suspension system cylinder 46 of the front axle 36, or by monitoring the output of a dedicated load sensor 48 located at the front wheel 14 of the front axle 36. This determined load is indicated at step 1 of Fig. 3.

The ECU 30 determines the tyre pressure of the front wheel 14, based on the output of a pressure sensor 40 provided at the front wheel 14 - step 2. Using the characteristic profile for the front axle wheel 14, the intersection of the determined wheel load of the front axle 36 and the measured tyre pressure is indicated at step 3, which can then be used to determine the wheel circumference for the front wheel 14 - step 4.

When the wheel circumference of the front axle 36 of the tractor 10 is known, it is possible to determine the wheel circumference of the rear axle 35 of the tractor 10, based on the wheel speed of the front and rear axles.

Accordingly, in a fifth step of the method of operation, the ECU 30 is arranged to determine the speed of the rear axle 34 and the front axle 36 based on the monitored outputs of the respective speed sensors 42,44. The monitored speeds and the determined circumference of the front axle wheel from step 4 above are then used to determine the circumference of the wheel 12 of the rear axle 34 - step 6 as shown in Fig. 4.

The wheel circumference of the front axle 36 is the distance which the tractor travels during a full 360° rotation of the front axle 36. Accordingly, the combination of the front wheel circumference and the wheel speed provides the travelled distance whereby:

nFRONT AXLE is the front axle speed,
UFRONT AXLE is the circumference of a wheel of the front axle
nREAR AXLE is the rear axle speed,
UREAR AXLE is the circumference of a wheel of the rear axle,
$t$ is the time period considered,

The travelled distance d can be calculated according the equation:

$$\mathrm{d} = n_{\text{Front axle}} \times U_{\text{Front axle}} \times t$$

The same distance with in same time period t must be travelled by the rear axle and its wheel so that an equivalent equation can be applied:

$$\mathrm{d} = n_{\text{Rear axle}} \times U_{\text{Rear axle}} \times t$$

This equation can be used to determine the circumference of a wheel of the rear axle by the equation:

$$U_{\text{Rear axle}} = \frac{d}{n_{\text{Rear axle}} \times t}$$

Whereby D can be substituted by the equation for the front axle, so that the final equation is received:

$$U_{\text{Rear axle}} = \frac{n_{\text{Front axle}} \times U_{\text{Front axle}}}{n_{\text{Rear axle}}}$$

Alternatively, the numbers of revolutions for front and rear axle within a predetermined time period may be counted to receive a similar relationship.

The ECU 30 then determines the tyre pressure of the rear wheel 12, based on the output of the pressure sensor 38 provided at the rear wheel 12 - step 7. Using the characteristic profile for the rear axle wheel 12, the intersection of the determined wheel circumference for the rear axle wheel 12 and the monitored tyre pressure of the rear axle wheel 12 is indicated at step 8. The characteristic profile can then be used to determine the wheel load for the rear axle wheel 12, indicated at step 9.

The determined wheel load for the rear axle 34 can then be used to control other systems or operations of the tractor 10, for example the regulation of tyre pressure throughout the tractor 10 using suitable tyre pressure control systems.

The system and method of the invention provides a system for determining the wheel load for a first axle of a vehicle, in particular a rear axle of a tractor, based on information derived from a second axle, in particular a front axle of a tractor. The lead ratio between the first and second axles is used in combination with characteristic profiles of the wheels of the axles which define the relationships between a wheel load and a wheel geometry such as circumference, radius or diameter for different tyre pressure values. The system and method of the invention allows for the simple and accurate determination of the wheel load of the first axle, without the need for a direct measurement of the wheel load or other strain-related elements at the first axle.

It will be understood that the invention is particularly intended for use in vehicles where the first axle can be driven independently of the second axle. Such separately drive axles can be provided without any direct mechanical connection between the axles, or with an adjustable mechanical coupling between the axles which allows for torque vectoring (such as described in Applicant's published patent applications WO2014/096450 and WO2014/096450 between the axles of the vehicle. Such vehicles may include agricultural tractors or harvesters

The invention is not limited to the embodiments described herein, and may be modified or adapted without departing from the scope of the present invention as defined by the following claims.

**Claims**

1. A method for determining the wheel load for a wheel of an axle, the method comprising:

   determining the wheel load for a wheel of a first axle ("first axle wheel") based on the tyre pressure of the first axle wheel and the wheel geometry of the first axle wheel,
   wherein the wheel geometry of the first axle wheel is determined based on the wheel geometry of a wheel of a second axle, and the wheel speed ratio between the first and second axles;
   **characterised in that** the method further comprises the step of providing a characteristic profile for the first axle wheel, the characteristic profile defining the relationship between a wheel load and a wheel geometry for different tyre pressure values, and wherein the step of determining the wheel load for the first axle wheel comprises calculating the wheel load based on the tyre pressure and the wheel geometry of the first axle wheel using the characteristic profile for the first axle wheel.

2. The method of claim 1, wherein the wheel geometry comprises at least one of the following: the wheel circumference, the wheel radius, the wheel diameter.

3. The method of claim 1 or claim 2, wherein the method is configured for determining the wheel load for a wheel of a rear axle of an agricultural tractor, wherein the first axle is a rear axle of an agricultural tractor, and wherein the second axle is a front axle of an agricultural tractor.

**4.** The method of any one of claims 1 to 3, wherein the method comprises the step of determining the wheel geometry of the second axle wheel, based on the wheel load of the second axle wheel and the tyre pressure of the second axle wheel.

**5.** The method of claim 4, wherein the method comprises the steps of receiving a wheel load for the second axle wheel, and receiving a tyre pressure for the second axle wheel. further preferably by monitoring the output of a load sensor of the second axle wheel.

**6.** The method of claim 4 or claim 5, further comprising the step of receiving a tyre pressure for the second axle wheel, preferably by monitoring the tyre pressure of the second axle wheel.

**7.** The method of any one of claims 4 to 6, wherein the method comprises the step of providing a characteristic profile for the second axle wheel, the characteristic profile defining the relationship between a wheel load and a wheel geometry for different tyre pressure values, and wherein the step of determining the wheel geometry for the second axle wheel comprises calculating the wheel geometry based on the tyre pressure and the wheel load of the second axle wheel using the characteristic profile for the second axle wheel.

**8.** The method of any preceding claim, wherein the method comprises the step of determining the wheel speed ratio between the first and second axles by measuring the speed of the first axle and the speed of the second axle, and calculating the ratio between the measured speeds, preferably wherein the step of measuring comprises receiving the output of a speed sensor for the first axle and the output of a speed sensor for the second axle.

**9.** The method of any preceding claim, wherein the method comprises the step of monitoring the tyre pressure of the first axle wheel, preferably by receiving the output of a tyre pressure sensor for the first axle wheel.

**10.** A vehicle (10), preferably an agricultural tractor, having an electronic control unit (ECU 30) arranged to carry out the method as claimed in any one of claims 1 to 9.

**11.** The vehicle of claim 10, wherein the vehicle (10) comprises a first axle having at least one wheel (12), and a second axle having at least one wheel (14), preferably wherein the first axle is a rear axle of an agricultural tractor and preferably wherein the second axle is a front axle of an agricultural tractor.

**12.** The vehicle of claim 11, wherein the vehicle (10) comprises an on-board memory (50) communicatively coupled with the ECU (30), to store a characteristic profile of a wheel (12, 14) of the first and/or second axle, the characteristic profile defining the relationship between a wheel load and a wheel geometry for different tyre pressure values of the wheel.

**13.** The vehicle of claim 11, wherein the ECU (30) is provided with algorithms to determine a characteristic profile of the first axle wheel (12) and/or the second axle wheel (14), the characteristic profile defining the relationship between a wheel load and a wheel geometry for different tyre pressure values of the wheel.

**14.** The vehicle of any one of claims 11 to 13, wherein the vehicle (10) comprises a load sensor (48) provided at the second axle, to determine the wheel load of the second axle wheel (14).

**15.** The vehicle of any one of claims 11 to 14, wherein the vehicle (10) comprises a tyre pressure sensor (38, 40) for the first axle wheel and/or for the second axle wheel.

**Patentansprüche**

**1.** Verfahren zum Bestimmen der Radlast für ein Rad einer Achse, wobei das Verfahren das Folgende aufweist:

Bestimmen der Radlast für ein Rad einer ersten Achse ("erstes Achsrad") basierend auf dem Reifendruck des ersten Achsrads und der Radgeometrie des ersten Achsrads,
wobei die Radgeometrie des ersten Achsrads basierend auf der Radgeometrie eines Rads einer zweiten Achse und dem Rad-Geschwindigkeitsverhältnis zwischen der ersten Achse und der zweiten Achse bestimmt wird;
**dadurch gekennzeichnet, dass** das Verfahren weiterhin den Schritt des Bereitstellens eines charakteristischen Profils des ersten Achsrads aufweist, wobei das charakteristische Profil das Verhältnis zwischen einer Radlast und einer Radgeometrie für verschiedene Reifendruckwerte definiert, und wobei der Schritt des Bestimmens der Radlast für das erste Achsrad das Berechnen der Radlast basierend auf dem Reifendruck und der Radgeometrie des ersten Achsrads unter Verwendung des charakteristischen Profils für das erste Achsrad aufweist.

2. Verfahren nach Anspruch 1, wobei die Radgeometrie mindestens eines der folgenden Dinge aufweist: den Radumfang, den Radradius, den Raddurchmesser.

3. Verfahren nach Anspruch 1 oder 2, wobei das Verfahren konfiguriert ist, um die Radlast für ein Rad einer Hinterachse eines landwirtschaftlichen Traktors zu bestimmen, wobei die erste Achse eine Hinterachse eines landwirtschaftlichen Traktors ist, und wobei die zweite Achse eine Vorderachse eines landwirtschaftlichen Traktors ist.

4. Verfahren nach mindestens einem der Ansprüche 1 bis 3, wobei das Verfahren den Schritt des Bestimmens der Radgeometrie des zweiten Achsrads aufweist, der auf der Radlast des zweiten Achsrads und dem Reifendruck des zweiten Achsrads basiert.

5. Verfahren nach Anspruch 4, wobei das Verfahren den Schritt des Empfangens einer Radlast für das zweite Achsrad und des Empfangens eines Reifendrucks für das zweite Achsrad aufweist, vorzugsweise weiterhin durch Überwachen der Ausgabe eines Lastsensors des zweiten Achsrads.

6. Verfahren nach Anspruch 4 oder 5, weiterhin mit dem Schritt des Empfangens eines Reifendrucks für das zweite Achsrad, vorzugsweise durch Überwachen des Reifendrucks des zweiten Achsrads.

7. Verfahren nach mindestens einem der Ansprüche 4 bis 6, wobei das Verfahren den Schritt des Bereitstellens eines charakteristischen Profils für das zweite Achsrad aufweist, wobei das charakteristische Profil das Verhältnis zwischen einer Radlast und einer Radgeometrie für verschiedene Reifendruckwerte definiert, und wobei der Schritt des Bestimmens der Radlast für das zweite Achsrad das Berechnen der Radgeometrie basierend auf dem Reifendruck und der Radlast des zweiten Achsrads unter Verwendung des charakteristischen Profils für das zweite Achsrad aufweist.

8. Verfahren nach mindestens einem der vorhergehenden Ansprüche, wobei das Verfahren den Schritt des Bestimmens des Radgeschwindigkeitsverhältnisses zwischen der ersten Achse und der zweiten Achse durch Messen der Geschwindigkeit der ersten Achse und der Geschwindigkeit der zweiten Achse, und des Berechnens des Verhältnisses zwischen den gemessenen Geschwindigkeiten aufweist, wobei vorzugsweise der Schritt des Messens das Empfangen der Ausgabe eines Geschwindigkeitssensors für die erste Achse und der Ausgabe eines Geschwindigkeitssensors für die zweite Achse aufweist.

9. Verfahren nach mindestens einem der vorhergehenden Ansprüche, wobei das Verfahren den Schritt des Überwachens des Reifendrucks des ersten Achsrads aufweist, vorzugsweise durch Empfangen der Ausgabe eines Reifendrucksensors für das erste Achsrad.

10. Fahrzeug (10), vorzugsweise ein landwirtschaftlicher Traktor, mit einem Elektronikmodul (ECU 30), das angeordnet ist, um das Verfahren nach mindestens einem der Ansprüche 1 bis 9 auszuführen.

11. Fahrzeug nach Anspruch 10, wobei das Fahrzeug (10) eine erste Achse mit mindestens einem Rad (12) und eine zweite Achse mit mindestens einem Rad (14) aufweist, wobei vorzugsweise die erste Achse eine Hinterachse eines landwirtschaftlichen Traktors ist, und wobei vorzugsweise die zweite Achse eine Vorderachse eines landwirtschaftlichen Traktors ist.

12. Fahrzeug nach Anspruch 11, wobei das Fahrzeug (10) einen bordeigenen Speicher (50) aufweist, der mit dem ECU (30) kommunizierend verbunden ist, um ein charakteristisches Profil eines Rads (12, 14) der ersten Achse und/oder der zweiten Achse zu speichern, wobei das charakteristische Profil das Verhältnis zwischen einer Radlast und einer Radgeometrie für verschiedene Reifendruckwerte des Rads definiert.

13. Fahrzeug nach Anspruch 11, wobei das ECU (30) mit Algorithmen versehen ist, um ein charakteristisches Profil des ersten Achsrads (12) und/oder des zweiten Achsrads (14) zu bestimmen, wobei das charakteristische Profil das Verhältnis zwischen einer Radlast und einer Radgeometrie für verschiedene Reifendruckwerte des Rads definiert.

**14.** Fahrzeug nach mindestens einem der Ansprüche 11 bis 13, wobei das Fahrzeug (10) einen Lastsensor (48) aufweist, der an der zweiten Achse bereitgestellt ist, um die Radlast des zweiten Achsrads (14) zu bestimmen.

**15.** Fahrzeug nach mindestens einem der Ansprüche 11 bis 14, wobei das Fahrzeug (10) einen Reifendrucksensor (38, 40) für das erste Achsrad und/oder für das zweite Achsrad aufweist.

**Revendications**

**1.** Procédé de détermination de la charge de roue d'une roue d'un essieu, le procédé comprenant :

la détermination de la charge de roue d'une roue d'un premier essieu ("roue de premier essieu") sur la base d'une pression de pneu de la roue de premier essieu et de la géométrie de roue de la roue de premier essieu, dans lequel la géométrie de roue de la roue de premier essieu est déterminée sur la base de la géométrie de roue d'une roue d'un second essieu, et du rapport de vitesse de roue entre les premier et second essieux ; **caractérisé en ce que** le procédé comprend, en outre, l'étape de fourniture d'un profil caractéristique pour la roue de premier essieu, le profil caractéristique définissant la relation entre une charge de roue et une géométrie de roue pour différentes valeurs de pression de pneu, et dans lequel l'étape de détermination de la charge de roue de la roue de premier essieu comprend le calcul de la charge de roue sur la base de la pression de pneu et de la géométrie de roue de la roue de premier essieu en utilisant le profil caractéristique de la roue de premier essieu.

**2.** Procédé selon la revendication 1, dans lequel la géométrie de roue comprend au moins un des éléments suivants : la circonférence de roue, le rayon de roue et le diamètre de roue.

**3.** Procédé selon la revendication 1 ou 2, dans lequel le procédé est configuré de manière à déterminer la charge de roue d'une roue d'un essieu arrière d'un tracteur agricole, dans lequel le premier essieu est un essieu arrière d'un tracteur agricole, et dans lequel le second essieu est un essieu avant d'un tracteur agricole.

**4.** Procédé selon l'une quelconque des revendications 1 à 3, dans lequel le procédé comprend l'étape de détermination de la géométrie de roue de la roue de second essieu, sur la base de la charge de roue de la roue de second essieu et de la pression de pneu de la roue de second essieu.

**5.** Procédé selon la revendication 4, dans lequel le procédé comprend les étapes de réception d'une charge de roue pour la roue de second essieu, et de réception d'une pression de pneu de la roue de second essieu, plus préférablement, en surveillant la sortie d'un capteur de charge de la roue de second essieu.

**6.** Procédé selon la revendication 4 ou 5, comprenant, en outre, l'étape de réception d'une pression de pneu de la roue de second essieu, de préférence, en surveillant la pression de pneu de la roue de second essieu.

**7.** Procédé selon l'une quelconque des revendications 4 à 6, dans lequel le procédé comprend l'étape de fourniture d'un profil caractéristique de la roue de second essieu, le profil caractéristique définissant la relation entre une charge de roue et une géométrie de roue pour différentes valeurs de pression de pneu, et dans lequel l'étape de détermination de la géométrie de roue de la roue de second essieu comprend le calcul de la géométrie de roue sur la base de la pression de pneu et de la charge de roue de la roue de second essieu en utilisant le profil caractéristique de la roue de second essieu.

**8.** Procédé selon l'une quelconque des revendications précédentes, dans lequel le procédé comprend l'étape de détermination du rapport de vitesse de roue entre les premier et second essieux en mesurant la vitesse du premier essieu et la vitesse du second essieu, et en calculant le rapport entre les vitesses mesurées, de préférence, dans lequel l'étape de mesure comprend la réception de la sortie d'un capteur de vitesse pour le premier essieu et de la sortie d'un capteur de vitesse pour le second essieu.

**9.** Procédé selon l'une quelconque des revendications précédentes, dans lequel le procédé comprend l'étape de contrôle de la pression de pneu de la roue de premier essieu, de préférence, en recevant la sortie d'un capteur de pression de pneu de la roue de premier essieu.

**10.** Véhicule (10), de préférence, un tracteur agricole, comportant une unité de commande électronique (ECU 30) agencée de manière à mettre en œuvre le procédé selon l'une quelconque des revendications 1 à 9.

11. Véhicule selon la revendication 10, dans lequel le véhicule (10) comprend un premier essieu comportant au moins une roue (12), et un second essieu comportant au moins une roue (14), de préférence dans lequel le premier essieu est un essieu arrière d'un tracteur agricole et, de préférence, dans lequel le second essieu est un essieu avant d'un tracteur agricole.

12. Véhicule selon la revendication 11, dans lequel le véhicule (10) comprend une mémoire intégrée (50) couplée de manière à pouvoir communiquer avec l'unité ECU (30), afin de mémoriser un profil caractéristique d'une roue (12, 14) du premier et/ou second essieu, le profil caractéristique définissant la relation entre une charge de roue et une géométrie de roue pour différentes valeurs de pression de pneu de la roue.

13. Véhicule selon la revendication 11, dans lequel l'unité ECU (30) comporte des algorithmes destinés à déterminer un profil caractéristique de la roue de premier essieu (12) et/ou de la roue de second essieu (14), le profil caractéristique définissant la relation entre une charge de roue et une géométrie de roue pour différentes valeurs de pression de pneu de la roue.

14. Véhicule selon l'une quelconque des revendications 11 à 13, dans lequel le véhicule (10) comprend un capteur de charge (48) agencé au niveau du second essieu afin de déterminer la charge de roue de la roue de second essieu (14).

15. Véhicule selon l'une quelconque des revendications 11 à 14, dans lequel le véhicule (10) comprend un capteur de pression de pneu (38, 40) pour la roue de premier essieu et/ou pour la roue de second essieu.

Fig. 1

Fig. 2

Fig. 3

Fig. 4

**EP 3 378 681 B1**

**Patent documents cited in the description**

- EP 2802202 B1
- WO 2004016455 A
- DE 102007047399 A1
- WO 2014096450 A